(19) Europäisches Patentamt

European Patent Office

Office européen des brevets

(11) **EP 4 717 786 A1**

(12) **EUROPEAN PATENT APPLICATION**

(43) Date of publication:
**01.04.2026  Bulletin 2026/14**

(21) Application number: **24202780.3**

(22) Date of filing: **26.09.2024**

(51) International Patent Classification (IPC):
*C22C 19/05* (2006.01)    *B23K 1/00* (2006.01)
*B23K 35/02* (2006.01)    *B23K 35/30* (2006.01)
*C22C 30/00* (2006.01)

(52) Cooperative Patent Classification (CPC):
**C22C 19/056; B23K 1/0018; B23K 35/304;**
**C22C 30/00;** B23K 35/0244

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Siemens Energy Global GmbH & Co.**
**KG**
**81739 München (DE)**

(72) Inventors:
• **Hasselqvist, Magnus**
  **61213 Finspång (SE)**
• **Gustafsson, David**
  **58564 Linghem (SE)**
• **Gyllenhammar, Maria**
  **59179 Fornåsa (SE)**

(54) **A NOVEL METHODOLOGY AND A NOVEL LM FILLER FOR WIDE GAP BRAZING OF CLASSICAL INDUSTRIAL GAS TURBINE BLADE ALLOYS**

(57)    The present invention relates to a metal alloy being especially useful, for example, as LM filler for Wide Gap Brazing of Classical Industrial Gas Turbine alloys. It further relates to the use of said metal alloy for brazing.

EP 4 717 786 A1

**EP 4 717 786 A1**

**Description**

The present invention relates to a new nickel-base gamma prime strengthened superalloy. It further relates to its use for brazing like as LM filler for Wide Gap Brazing of Classical Industrial Gas Turbine alloys such as, but not restricted to, IN792, GTD-111, GTD-141 and IN738LC.

High strength nickel base gamma prime strengthened superalloys, from here on referred to as blade alloys, are essential for critical components in aero and land-based gas turbines, but are used also in other applications. The difference between blade alloys depends on the level of knowledge and production technology available at the time they were developed, and, on different relative emphasis on properties such as corrosion resistance, oxidation resistance, weldability, phase stability and creep strength.

Blade alloys are used in monocrystalline (SX), directionally solidified (DS) or equiaxed (CC) form. Each grain is a crystal mainly consisting of a matrix of the gamma phase, which is essentially Ni with elements like Co, Fe, Cr, Mo, W and Re in solid solution, and particles of the gamma prime phase which is essentially $Ni_3Al$ with elements like Ti, Ta and Nb in solid solution. Each grain is a two-phase crystal in which the gamma matrix and the gamma prime particles share the same crystal orientation and the boundaries between the matrix and the particles are coherent. Grain boundaries, if present, are usually decorated by carbides and/or borides which provide cohesive strength. Zr also contributes to grain boundary cohesion.

Creep strength is provided by the gamma prime particles, by Ti, Ta and Nb which provide solution strengthening of the gamma prime particles, and elements like Mo, W and Re which provide solution strengthening of the gamma matrix. Al provides creep strength as it increases the amount of gamma prime particles, and, as the presence of gamma prime particles concentrates the levels of Mo, W and Re in the matrix. High creep strength furthermore require that the grain boundaries are 'glued together' by B, Zr and C. This require said alloy elements to be present at low measured levels such that borides and carbides are present as discrete particles rather than as continuous film on said boundaries.

Blade alloys get their protection against oxidation and corrosion through formation of a protective, i.e. continuous and adherent, $Cr_2O_2$ layer and/or a protective, i.e. continuous and adherent, $Al_2O_3$ layer, in the oxide scale.

The generally accepted rule of thumb is that protective $Cr_2O_3$ formation require at least 12 wt.-% Cr. Protective $Cr_2O_2$ layers typically stay long term protective up to temperatures in the order of 900°C in the flowing hot gas environment in a gas turbine hot path. The ability to form protective $Al_2O_3$ is provided by Al, enhanced by Cr, Ta and Si, and reduced by V, Ti and Nb. Protective $Al_2O_3$ is typically formed down to about 850°C in blade alloys regarded as $Al_2O_3$ formers.

Due to the difference in thermal expansion between the metal and the protective oxide layer, said oxide layer will spall off and then need to be reformed. Each time this happens the reservoir of Cr (for protective $Cr_2O_3$) or Al (for protective $Al_2O_3$) is reduced, and eventually reformation is not possible leading to accelerated oxidation. Herein, the protective layer adherence is severely reduced by tramp elements such as S, but, that this effect can be neutralized by a combination of clean casting and addition of small measured levels of S get-terers like Zr, Hf, Sc, Y, the actinides and the lanthanides in the alloy. Such additions will therefor suppress the time dependent degradation of the alloy. In addition, it is obviously an advantage to apply clean production processes in order to reduce the initial sulfur content. S can e.g. be present in master heats for casting, powders for brazing, and within rigs such as brazing rigs.

If the amount of alloy elements in a blade alloy is too high, too high levels of undesired phases (UP) such as s and Laves phases will form in service. One particular effect of UP precipitation is a reduction in creep strength. Another effect is embrittlement. Another effect is reduction of oxidation and corrosion resistance if Cr is tied up in Cr rich UP.

The blade alloy density can be calculated using the formula r = 8.29604 - 0.004535Co - 0.0164Cr + 0.01295Mo + 0.0593Re + 0.06595W - 0.06595Al - 0.0236Ti + 0.05441Ta - 0.002Nb + 0.033Hf - 0.063Si - 0.009Fe where r is in $[kg/dm^3]$ and the element contents are provided in [wt.-%] .

Most blade alloys can be characterized as Classical Industrial Gas Turbine (IGT) alloys, Aero alloys or New IGT alloys, see table 1.

The class of Classical IGT alloys include IN792, GTD-111, GTD-141 and IN738LC. The classical IGT alloys contain at least 12 wt.-% Cr for formation of protective $Cr_2O_3$. The classical IGT blade alloys do not have the ability to form protective $Al_2O_3$. Their Al levels are too low, and their Ti levels too high. For example, the hot corrosion resistance of the alloy SC16 with 16 wt.-% Cr and 3 wt.-% Mo is significantly inferior to the alloy IN738LC with 16 wt.-% Cr and 1.8 wt.-% Mo. Most Classical IGT alloys include at most 2 wt.-% Mo to avoid the problems seen in SC16. Most hot gas path blade alloys in industrial gas turbines are still made in the classical IGT alloys (hence the name for this class of blade alloys).

The class of Aero alloys include CM247CC and CMSX-4, see Table 1. Most Aero alloys are able to form protective $Al_2O_3$ thanks to low levels of Ti and Nb, and, high levels of Al and Ta, and, despite low levels of Cr. Due to their low Cr levels they are unable to form protective $Cr_2O_3$. Since protective $Al_2O_3$ cannot form below about 850°C, the Aero alloys are vulnerable to the influx of corrosive elements into the blade alloy through a too permeable oxide scale. Furthermore,

2

corrosive agents such as alkali salts which cause hot corrosion unfortunately tend to be especially active in the range 700 to 850°C. Many hot gas path components in Aero engines are made in Aero alloys (hence the name of this class of alloys).

The class of New IGT alloys include the SX alloy STAL15SX, the LMD alloy Edge15, and the CC alloys STAL125CC1 and STAL15CC2, see Table 1. These alloys have sufficient Cr for formation of protective $Cr_2O_3$ at low and intermediate temperatures, typically up to about 900°C. Furthermore, they form protective $Al_2O_3$ at high temperature, typically above about 850°C, thanks to moderate to high levels of Al supported by a high sum of the elements Cr, Ta, and Fe. The New IGT alloys are low in Ti and Nb. The New IGT alloys enable hot corrosion resistance on the Classical IGT alloy level in combination with oxidation resistance on the Aero alloy level. It is of interest for the present invention that the New IGT CC alloys in Table 1 contain a small measured level of Si. This is to avoid the risk that the Si level becomes too low for Si to act as catalyst for selective oxidation. It is furthermore of interest to note that when the trial alloy STAL125CC2 was designed as a derivative of STAL125CC1 via a partial replacement of Co by Fe, the gamma prime decreased slightly, and the W content had to be slightly reduced to avoid an increased risk for UP formation. Testing showed that the time to creep rupture was reduced by about 50%, however, the creep ductility was, if anything, improved. The inclusion of Fe thus means that some creep strength is traded for further improved oxidation resistance, a trade off which is e.g. reasonable in the context of moderately loaded stator parts in gas turbines given the always increasing Turbine Inlet Temperatures.

When blade alloys are cast, the solidification starts at the Liquidus temperature, is finalized at the Solidus temperature, and gamma prime starts to precipitate at the Solvus temperature. The temperature range between the Solvus and the Solidus is known as the Heat Treatment Window (HTW). The as cast gamma prime morphology is seldom useful. The casting is accordingly followed by a (gamma prime) solutioning step with a solutioning temperature within the HTW, followed by one or more aging steps below the Solvus to establish a useful gamma prime morphology. The combination of these steps is referred to here as the nominal heat treatment. The optimization of the heat treatment process is as important and (at least as) time consuming as the optimization of the composition when a new alloy is developed. Once the nominal composition and the associated nominal heat treatment have been established, and Design Data derived based on tests on specimen produced according to this combination of composition and heat treatment, the new blade alloy is established. Any coating application or brazing step must then be introduced such that the gamma prime morphology is not altered relative to the outcome from the nominal heat treatment, otherwise the Design Data are invalidated. The introduction of a brazing step without invalidation of the Design Data is made easier if the brazing is carried out at the solutioning temperature for the blade alloy.

A Nickel base Brazing Filler Metal (BFM) is an alloy to which one or more melt depressant elements have been added to force the Liquidus in said alloy down to a level below the intended brazing temperature. In a typical thin gap brazing process the temperature is raised to above the Liquidus for the BFM, while the parts to be joined should be below their Solidus levels to avoid incipient melting in said parts. The liquid BFM is drawn into the gap by capillary force, the surfaces of that gap are wetted by the BFM, and the melt depressant in the BFM starts to diffuse from the gap into the surrounding parts. The resultant reduction in the levels of melt depressants in the gap should preferably result in full solidification while the temperature is still kept at the brazing temperature. This desirable outcome is called Transient Liquid Bonding (TLB). If TLB is achieved at the solutioning temperature for the main part being brazed, then we can exclude re-melting of the joint at any subsequent resolutioning step of said main part, done e.g. during a subsequent repair process. The melt depressant elements should preferably be present at 'not too detrimental' values in the parts in and around the joint after the brazing.

The by far most common melt depressant element for brazing of nickel base alloys is Boron. If Boron is used as melt depressant, the Boron content in the BFM is about 3 wt.-%, see Table 2, while the Boron contents in the parts to be joined is about 0.015 wt.-%, see Table 1. A good result is a Boron content not exceeding 0.05 wt.-% anywhere in and around the joint. This can in principle be achieved if the gap is suitably thin (0.02 to 0.12mm as also needed to enable capillary force brazing), the brazing temperature is done at the solutioning temperature for the blade alloy in the main part to be brazed, and, the brazing time is sufficiently long. The reason is that the parts around the gap constitute huge diffusion sinks for the Boron in the BFM. Boron is the most common melt depressant since it is a powerful melt depressant, and, has a high diffusivity in blade alloys relative to most other melt depressants. While Boron at a small measured level is vital for the creep ductility of a blade alloy, the ductility (under most loadings conditions) decreases as the Boron content increases beyond such levels. At sufficiently high residual Boron contents the formation of Cr rich borides will unfortunately reduce the Cr activity resulting in reduced oxidation and corrosion resistance in and around the joint. A high residual Boron content also implies that TLB cannot be achieved.

When it is difficult to obtain a sufficiently thin gap, or a potentially irregularly shaped hole need to be filled as part of a repair process, Wide Gap Brazing (WGB) can be utilized.

A mix of a BFM, in this context known as the Low Melting (LM) filler, and a High Melting (HM) filler is used to fill this wide gap. The temperature is increased to the brazing temperature where (ideally) the LM filler fully melts while the HM filler stays solid. Then interdiffusion between the initial LM and HM areas result in a more or less homogenized Mixed Alloy (MA). The HM:LM Mixing Ratio (MR) is typically between about 1 and 3. During WGB it is the HM filler which tries, with more or less success, to act as the diffusion sink for the melt depressants in the LM filler. Relative to thin gap brazing there is a significantly higher amount of melt depressant elements to be neutralized.

The standard methodology for WGB of a blade alloy is to choose a standard BFM having Boron as the main melt depressant as the LM filler, and the blade alloy itself (or possibly a similar blade alloy) as the HM filler. The resulting MA will contain a massively increased level of B relative to the blade alloy. The level of B in the LM filler is typically about 3 wt.-%. With MR=2 this translates into a B content of about 1wt.-% in the MA. This implies that the B content in the MA will be about 50 to 100 times higher than in the blade alloy, compare Table 1. While B at a low level is essential for the grain boundary strength of a blade alloy, its presence at a massively higher level will typically reduce the strength, the ductility, the corrosion resistance and the oxidation resistance. Typically, there will be precipitation of Cr rich borides which embrittle the MA and reduce the effective level of Cr in the MA such that the corrosion and oxidation resistance is accordingly reduced relative to the base alloy. There is also a high risk that the MA will have a Solidus below the solutioning temperature for the base alloy such that TLB cannot be achieved for brazing at said solutioning temperature. In total, the MA will be a significantly B contaminated version of the blade alloy being used as HM filler.

There are BFM's with other melt depressant recipes, see Table 2. BNi5 is based on Si, BNi1a is based on a combination of B and Si and BNi7 is based in P, US011344977B2 discloses BFM's based on Ti and Zr and Ti and Hf referred to as OZ1 and OZ2 respectively. US20150343574A1 presents BFM's based on Cr, Mo and Ti and Cr and Ti referred to as OZ3 and OZ4 respectively.

Consider now an extension of the standard methodology to the use of any BFM in which 'B is not utilized as melt depressant' as LM filler in combination with a blade alloy as HM filler:

If a BFM using Si as main melt depressant is chosen while the choice of a blade alloy as HM filler is kept, the MA will contain a massively increased level of Si in the MA relative to that in the blade alloy. The level of Si in the LM filler is typically about 10 wt.-%. With MR=2 this translates into a Si content of 3 wt.-% in the MA. Blade alloys tend to contain between about 0.01 wt.-% Si as deliberate content, unless it is regarded as a contaminant. This implies that the Si content in the MA will be at about 300 times higher than in a normal blade alloy. Its presence at a massively higher level in the MA will typically reduce the strength of its grain boundaries relative to that of a standard blade alloy. It can also reduce the Solidus of the MA and make TLB impossible to achieve. In total, the MA will be a significantly Si contaminated version of the blade alloy being used as HM filler.

If a BFM using Zr as main melt depressant is chosen while the choice of a blade alloy as HM filler is kept, the MA will contain a massively increased level of Zr in the MA relative to that in the blade alloy. The level of Zr in the LM filler is about 10 wt.-%, see Table 2. With MR=2 this translates into a Zr content of at least 3wt.-% in the MA. Blade alloys tend to contain between about 0.01 to 0.02 wt.-% Zr as deliberate content, see Table 1. This implies that the Zr content in the MA will be about 150 times higher than in a standard blade alloy. Its presence at a massively higher level in the MA than in a standard blade alloy will typically reduce the Solidus of the MA and make TLB impossible to achieve. In total, the MA will be a significantly Zr contaminated version of the blade alloy being used as HM filler.

If a BFM using P, Mn or Ge is used as LM filler while the choice of a blade alloy as HM filler is kept, the levels of P, Mn or Ge in the MA will be massively higher than the very low levels at which they are allowed in a standard blade alloy specification where these elements are seen as contaminants. In total, the MA will be a significantly contaminated version of the blade alloy being used as HM filler. The use of these as melt depressants in a LM filler should thus if possible be avoided.

If a BFM using alloy elements such as Cr, Mo, Ti or Hf is used as LM filler while the choice of the base alloy is kept, their values in the MA will not be massively higher than in a standard blade alloy, and the MA will essentially contain the same group of elements as a Classical IGT alloy. This group of BFM's, exemplified by OZ2 to OZ4 in Table 2, is of obvious interest. Consider, as illuminating examples, WGB with MR=2 in which these are used as LM fillers while the blade alloy IN792Hf is used as HM filler:

OZ2 as LM filler result in a MA given, in wt.-%, by

MA2: Ni-6.7Co-9.8Cr-1.2Mo-2.7W-2.2Al-5.5Ti-2.8Ta-6.5Hf-0.05C-0.01B-0.015Zr

MA2 has a Cr content below 12 wt.-% Cr, hence a reduced corrosion and oxidation resistance relative to IN792Hf has to be expected. ThermoCalc with TTNi8 predicts 6 mol% Ni7M2 as UP at 800°C, and, crucially a Solidus of only 1117°C implying that TLB cannot be achieved at 1200°C which is the solutioning temperature for IN792Hf. Even though the Hf content in IN792Hf is only 0.5 wt.-%, the very high level of Hf in OZ2 implies a Hf level in the MA which implies a significant retained melt depressant effect, hence the low Solidus.

OZ3 as LM filler result in a MA given, in wt.-%, by

MA3: Ni-10.9Co-13.4Cr-5.5Mo-2.7W-2.9Al-6.1Ti-2.8Ta-0.3Hf-0.05C-0.01B-0.015Zr

ThermoCalc with TTNi8 predicts a high level of 14.6 mol% s phase as UP, and a Solidus of 1207$^{°C}$ implying that TLB can be achieved at 1200°C, but only barely so. The Mo content is well above the 2 wt.-% limit which classical IGT alloys tends to stay below to avoid a reduction in hot corrosion resistance. One of the main reasons for this is that IN792Hf has 1.8 wt.-% Mo, close to the 2 wt.-% limit, and its ability to act as a sink for the high Mo content in the LM filler is therefore poor.

OZ4 as LM filler result in a MA given, in wt.-%, by

MA4: Ni-6.7Co-13.8Cr-1.2Mo-2.7W-2.2Al-10.9Ti-2.8Ta-0.3Hf-0.05C-0.01B-0.015Zr

ThermoCalc with TTNi8 predicts 24 mol% h phase and 16 mol% s phase as UP, i.e. very high levels of UP, a Solidus of 1197°C implying that full TLB cannot be achieved at 1200°C. One of the main reasons for this is that IN792Hf contains a high level of Ti, hence its ability to act as a sink for the very high Ti content in the LM filler is poor.

It is an objective of the present invention to provide a combination of a LM filler, and a methodology for WGB, enabling the resulting MA to be a high strength nickel base gamma prime strengthened superalloy with a low level of UP. It is furthermore an objective of this invention to provide embodiments tailored to WGB of classical IGT alloys such as IN792, GTD-111, GTD-141 and IN738LC. Tailored is taken as enabling an MA similar in corrosion and oxidation resistance relative to the associated blade alloy via similar levels of critical elements such as Cr and Al, and no introduction of alloy elements which reduce the corrosion and oxidation resistance. Tailored is furthermore taken as enabling an MA at most moderately reduced in strength relative to the associated base alloy via at most moderately reduced levels of the gamma prime content and at most moderately reduced levels of strengthening elements. It is furthermore an objective of this invention to enable Transient Liquid Solidification (TLB) when the brazing is done at the Solutioning Temperature (ST) for the associated blade alloy. Classical IGT alloys are typically solutioned at about 1200°C. In line with this a further objective for the LM filler is a Liquidus of at most about 1180°C to provide a margin of 20°C to the brazing temperature. It is a further objective of this invention to use the LM filler for thin gap brazing of a Classical Industrial Gas Turbine alloys against a lean alloy acting as a diffusion sink such that the strength of this lean alloy is increased in the vicinity of the joint. It is a further objective of this invention to use the LM filler for brazing of cover plates in lean sheet alloys such as Nim75 and Haynes214 to components such as vanes and heat shields made in Classical Industrial Gas Turbine alloys. It is a further objective of this invention to use the LM filler for thin gap brazing of a Classical Industrial Gas Turbine alloys against any other Nickel base alloy in which one or more of the surfaces to be joined is Ni plated such that said Ni plating acts as a diffusion sink.

These problems are solved by the methods and products as disclosed hereafter and in the claims. Further beneficial embodiments are disclosed in the dependent claims and the further description. These benefits can be used to adapt the corresponding solution to specific needs or to solve further problems.

According to one aspect the present invention refers to a metal alloy containing

0 wt.-% to 15 wt.-% Co,
12 wt.-% to 18 wt.-% Fe,
12 wt.-% to and 18 wt.-% Cr,
1 wt.-% to 6 wt.-% Mo,
2.5 wt.-% to 5.5 wt.-% Al,
7 wt.-% to 15 wt.-% Ti,
0 wt.-% to 0.1 wt.-% C,
0 wt.-% to 0.05 wt.-% B,
0 wt.-% to 0.1 wt.-% Zr,
0 wt.-% to 3 wt.-% Hf,
0 wt.-% to 0.1 wt.-% Si, and
a total amount of the sum of the wt.-% of Ta and twice the wt.-% of Nb being selected from a range from 2.5 wt.-% to 10 wt.-%,
a total amount of rare earths such as Sc, Y, actinides and lanthanides being selected from a range from 0 to 0.3 wt.-%,
the rest being Ni and unavoidable impurities.

According to further embodiments the present invention the metal alloy contains

0 wt.-% to 15 wt.-% Co,
12 wt.-% to 18 wt.-% Fe,
12 wt.-% to 18 wt.-% Cr,
1 wt.-% to 6 wt.-% Mo,
2.5 wt.-% to 5.5 wt.-% Al,
7 wt.-% to 15 wt.-% Ti,
2.5 and 10 wt.-% of the sum of Ta+2Nb,
0 wt.-% to 0.1 wt.-% C,
0.005 wt.-% to 0.05 wt.-% B,
0.005 wt.-% to 0.05 wt.-% Zr,
0 wt.-% to 3 wt.-% Hf,
0.005 wt.-% to 0.05 wt.-% Si, and
a total amount of rare earths such as Sc, Y, actinides and lanthanides being selected from a range from 0.01 wt.-% and 0.3 wt.-%, the rest being Ni and unavoidable impurities.

According to further embodiments the present invention the metal alloy contains 14 wt.-% to 18 wt.-% Fe,

12 wt.-% to 14 wt.-% Cr,
3 wt.-% to 4.5 wt.-% Mo,
2.5 wt.-% to 4 wt.-% Al,
7 wt.-% to 10 wt.-% Ti,
7 wt.-% to 10 wt.-% Ta,
0.005 wt.-% to 0.05 wt.-% C,
0.005 wt.-% to 0.05 wt.-% B,
0.005 wt.-% to 0.05 wt.-% Zr,
0.5 wt.-% to 1.5 wt.-% Hf,
0.005 wt.-% to 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

According to further embodiments the present invention the metal alloy contains about 16 wt.-% Fe, about 13 wt.-% Cr, about 3.6 wt.-% Mo, about 3.3 wt.-% Al, about 8.4 wt.-% Ti, about 8.4 wt.-% Ta, about 0.01 wt.-% C, about 0.03 wt.-% B, about 0.03 wt.-% Zr, 1 wt.-% Hf, about 0.01 wt.-% Si, and, about 0.04 wt.-% Y, the rest being Ni and unavoidable impurities.

According to further embodiments the present invention the metal alloy contains

7 wt.-% to 13 wt.-% Co,
13 wt.-% to 17 wt.-% Fe,
12 wt.-% to 16 wt.-% Cr,
1 wt.-% to 2 wt.-% Mo,
2.5 wt.-% to 3.5 wt.-% Al,
13 wt.-% to 15 wt.-% Ti,
2.5 wt.-% to 4 wt.-% Ta,
0.005 wt.-% to 0.05 wt.-% C,
0.005 wt.-% to 0.05 wt.-% B,
0.005 wt.-% to 0.05 wt.-% Zr,
0.005 wt.-% to 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

According to further embodiments the present invention the metal alloy contains about 10 wt.-% Co, 15 wt.-% Fe, about 14 wt.-% Cr, about 1.5 wt.-% Mo, about 3 wt.-% Al, about 14.1 wt.-% Ti, about 3 wt.-% Ta, about 0.01 wt.-% C, about 0.03 wt.-% B, about 0.03 wt.-% Zr, about 0.01 wt.-% Si, and, about 0.04 wt.-% Y, the rest being Ni and unavoidable impurities.

According to further embodiments the present invention the metal alloy contains

7 wt.-% to 13 wt.-% Co,
13 wt.-% to 17 wt.-% Fe,
12 wt.-% to 16 wt.-% Cr,
1 wt.-% to 2 wt.-% Mo,
2.5 wt.-% to 3.5 wt.-% Al,
13 wt.-% to 15 wt.-% Ti,
1.25 wt.-% to 2 wt.-% Nb,
0.005 wt.-% to 0.05 wt.-% C,
0.005 wt.-% to 0.05 wt.-% B,
0.005 wt.-% to 0.05 wt.-% Zr,
0.005 and 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

According to further embodiments the present invention the metal alloy contains about 10 wt.-% Co, 15 wt.-% Fe, about 14 wt.-% Cr, about 1.5 wt.-% Mo, about 3 wt.-% Al, about 14.1 wt.-% Ti, about 1.5 wt.-% Nb, about 0.01 wt.-% C, about 0.03 wt.-% B, about 0.03 wt.-% Zr, about 0.01 wt.-% Si, and, about 0.04 wt.-% Y, the rest being Ni and unavoidable impurities.

According to further embodiments the present invention the metal alloy contains

8 wt.-% to 13 wt.-% Co,
13 wt.-% to 17 wt.-% Fe,
12 wt.-% to 16 wt.-% Cr,
3 wt.-% to 6 wt.-% Mo,
2.5 wt.-% to 4.5 wt.-% Al,
8 wt.-% to 13 wt.-% Ti,
1.5 wt.-% to 2.5 wt.-% Ta,
0.5 wt.-% to 1.5 wt.-% Nb,
0.005 wt.-% to 0.05 wt.-% C,
0.005 wt.-% to 0.05 wt.-% B,
0.005 wt.-% to 0.05 wt.-% Zr,
0.005 wt.-% to 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

According to further embodiments the present invention the metal alloy contains about 10.5 wt.-% Co, 15 wt.-% Fe, about 14 wt.-% Cr, about 4.5 wt.-% Mo, about 3.5 wt.-% Al, about 10.5 wt.-% Ti, about 1.8 wt.-% Ta, about 0.9 wt.-% Nb, about 0.01 wt.-% C, about 0.03 wt.-% B, about 0.03 wt.-% Zr, about 0.01 wt.-% Si, and, about 0.04 wt.-% Y, the rest being Ni and unavoidable impurities.

According to further embodiments the present invention the metal alloy was produced with a low sulfur process resulting in less than 5 ppmw S of the metal alloy. Herein, ppmw stands for parts per million based on the weight of the metal alloy.

According to a further aspect the present invention refers to a use of a metal allow of any of the preceding claims for brazing.

According to further embodiments the present invention the brazing is a wide gap brazing with a lean high melting filler to enable a mixed alloy which is a classical industrial gas turbine blade alloy with a high phase stability as outlined the section describing the invention in which the high melting filler is produced with a low sulfur process resulting in less than 5 ppmw S.

According to further embodiments the present invention the brazing is a thin gap brazing of a classical IGT alloy to a lean sheet alloy such that the sheet alloy is strengthened at and close to the joint as it absorbs the excess levels of strengthening elements from the low melting filler.

According to further embodiments the present invention the brazing is a thin gap brazing of parts made in Nickel base alloys in which one or more of the surfaces to be brazed has been Ni plated such that the plating is strengthened as it absorbs the excess levels of strengthening elements from the low melting filler.

According to further embodiments the present invention the brazing is a thin gap brazing of parts made in lean Nickel base alloys such as, but not restricted to, Nim75 in which the joint is strengthened relative to said Nickel base alloy as it absorbs the excess levels of strengthening elements from the low melting filler.

It is clear from the technical background that if B, Si, Zr, P, Mn or Ge are used in the LM filler, they will be present at very significantly higher levels in the MA than their allowable upper limits in the specifications for Classical IGT alloys. This is deemed risky with respect to the objectives above. Hf at a high level is also seen as risky.

The LM filler used to meet the objective for the present invention is based on a wide synergy melt depressant recipe comprising Fe, and alloy elements such as Cr, Mo, Ti, Ta, Nb and Hf which are used as alloy elements in Industrial Gas Turbine alloys. The use of such alloy elements, especially of Ti, as melt depressant elements is not unknown. The novelty here is the blade alloy associated design of the melt depressant recipe in combination with a lean HM filler to preserve most of the properties in the blade alloy in the resulting MA.

In the methodology used to meet the objective for the present invention, those alloy elements in a given classical IGT alloy which, at elevated level, provide a melt depressant effect are identified. Then an LM filler is designed in which a selection of those elements is included at judiciously chosen excess levels relative to their levels in the chosen IGT alloy, and Fe is furthermore included. This LM filler must have a Liquidus at or below about 1180°C since it is to be used for WGB at 1200°C.

If this design is carried out correctly the mixing of this LM filler with a judiciously chosen HM filler which absorbs these excess levels will result in a MA which enables TLB, has a high phase stability, provides oxidation and corrosion resistance similar to the given classical IGT alloy, and an at most moderate reduction in strength relative to the classical IGT alloy. The composition of the MA will in fact be broadly similar to that of the given classical IGT alloy. The difference will be that Co will be partially, or possible fully, replaced by Fe, and, that the levels of one or more strengthening elements will be moderately reduced to ensure a similarly high phase stability despite the fact that Fe is somewhat more prone than Co to participate in UP formation.

The inventive idea is exemplified below for the classical IGT alloys IN792Hf, GTD-111, GTD-141 and IN738LC. LM filler embodiments corresponding to these base alloys are presented within these examples.

The Classical IGT alloy IN792Hf has a composition, in wt.-%, given by

Ni-8.5Co-12.5Cr-1.8Mo-4W-3.3Al-4.2Ti-4.2Ta-0.5Hf-0.07C-0.015B-0.015Zr Cr, Mo, Ti, Ta and Hf are identified as alloys which, at elevated levels, provide a melt depressant effect. If the LM filler is defined, in wt.-%, as

LM792: Ni-16Fe-13Cr-3.6Mo-0.5W-3.3Al-8.4Ti-8.4Ta-1Hf-0.01C-0.03B-0.03Zr-0.01Si-0.04Y
and is mixed 1:1 with a lean HM filler defined, in wt.-%, as

HM792: Ni-12Cr-5.5W-3.3Al-0.13C-0.01Si-0.04Y
the result after brazing and homogenization is an MA with a composition, in wt.-%, of

MA792: Ni-8Fe-12.5Cr-1.8Mo-3W-3.3Al-4.2Ti-4.2Ta-0.5Hf-0.07C-0.015B-0.015Zr-rem(Y)

The values of Mo, Ti, Ta and Hf are at excess levels in LM792 while set to zero in HM792 which acts as a diffusion sink and absorbs these excess levels. The result is that MA792 does contain the same levels of Mo, Ti, Ta and Hf as IN792Hf. Small levels of Si and Y have been added to LM792 and HM792 to ensure selective oxidation of $Cr_2O_3$, and, to neutralize S present in the LM or HM powder, or, picked up during the brazing process. Rem(Y) denotes remaining Y after the WGB process in which some of the initial Y will evaporate. However, it is in principle possible to exclude any or all of the Zr, B, Si or Y additions in the LM filler if they are included at higher, if still small, levels in the HM filler.

In MA792, Co has been replaced by Fe relative to IN792Hf. W has been moderately reduced to handle that Fe is somewhat more prone than Co to participate in UP formation. MA792 is similar to IN792 in gamma prime content and strengthening element levels but to some extent weakened by the reduced level of W. It has the same Cr, Al and Ta levels to provide a similar environmental resistance. Relative to IN792Hf, MA792 has no additional elements which are known to be generally deleterious for the oxidation or corrosion resistance.

According to ThermoCalc using TTNi8 as data base, LM792 has a Liquidus of 1179°C while the Solidus of MA792 is 1238°C. DSC measurements on arc melted buttons of LM792 and MA792 showed a Liquidus of about 1175°C for LM792 and a Solidus of about 1260°C for MA792. Brazing at the solutioning temperature, which is 1200°C for IN792HF, thus result in full melting of LM792. Furthermore, since the Solidus of the MA is well above the brazing temperature TLB can be achieved.

Sensitivity analysis using ThermoCalc with TTNi8 as data base reveal that the melt depressant effect is indeed obtained via a wide synergy. If Cr, Fe, Mo, Ti, Ta or Hf is eliminated from LM792 the Liquidus is increased by 50, 52, 28, 179, 79 and 11°C respectively. The melt depressant effect can be regarded as enabled by Ti and enhanced by Cr, Fe, Mo, Ta and Hf. The Fe addition provides an important part of the synergy effect. It is interesting to note that the moderate addition of Mo has a surprisingly beneficial effect. It is furthermore interesting that 1 wt.-% Hf has a not insignificant effect. Taken together, these elements allow a Liquidus of less than 1180°C to be obtained. Except for Fe, the elements used to provide the melt depressant effect are all included in the blade alloy IN792Hf.

The density, calculated using the extended Caron formula, is about 8.26 for LM792 and HM792. In order to enable this only a small amount of W was included in LM792 such that a high amount could be included in HM792 to allow it to match LM792 in density. With respect to W, LM792 is used as diffusion sink for HM792.

The methodology described here is flexible. If LM792 is kept as LM filler, MR is set to 3, and the HM filler defined, in wt.-%, as

HM792b: Ni-12.3Cr-5.3Co-1.2Mo-4.5W-3.3Al-2.8Ti-2.8Ta-0.25Hf-0.09C-0.01B-0.01Zr-0.01Si-0.04Y
the resulting MA is given by

MA792b: Ni-4Co-4Fe-12.5Cr-1.8Mo-3.5W-3.3Al-4.2Ti-4.2Ta-0.5Hf-0.07C-0.015B-0.015Zr-0.01Si-rem(Y)

This is even closer to IN792Hf in the sense that Co is only partially replaced by Fe. In this case Mo, Ti, Ta and Hf are reduced rather than eliminated, relative to IN792Hf, in the HM filler. The HM filler is nevertheless able to fulfil its role as diffusion sink and absorb the excess levels of Mo, Ti, Ta and Hf in LM792 since the amount of HM filler has increased relative to the case of MR=1. The partial replacement of Co by Fe and the reduction of W by 0.5wt.-% relative to IN792Hf corresponds well to the difference between STAL125CC1 and its derivative STAL125CC2, see the technical background. Hence it seems reasonable to assume a reduction in creep rupture strength by a factor of about 2 in terms of composition strength for MA792b relative to IN792Hf.

It is instructive to compare with the classical methodology as applied to IN792Hf using LM792 as LM filler. Classical methodology is taken as the use of IN792Hf itself as HM filler. With MR=2, the resulting MA is given, in wt.-%, by Ni-12.7Cr-5.7Co-5.3Fe-2.4Mo-3W-3.3Al-5.6Ti-5.6Ta-0.7Hf-0.05C-0.02B-0.02Zr

According to ThermoCalc/TTNi8, this MA has a Solidus of 1202°C, which makes TLB at 1200°C difficult to achieve, and precipitates >11mol% of the intermetallic Cr rich σ phase at 800°C. The result will be reduced oxidation and corrosion resistance, and reduced strength and ductility relative to IN792Hf. LM792 as LM filler for WGB does not provide a major advantage over other LM fillers unless a lean HM alloy is used to absorb the excess levels of Mo, Ti, Ta and Hf in it. Its usefulness is linked to the new methodology.

The base alloy GTD-111 has a composition, in wt.-%, of
Ni-14Cr-9.5Co-1.5Mo-3.7W-3Al-4.9Ti-2.8Ta-0.1C-0.015B-0.02r

It is high in the melt depressant element Ti. If the LM filler is defined, in wt.-%, as

LM111: Ni-10Co-15Fe-14Cr-1.5Mo-3Al-14.1Ti-3Ta-0.01C-0.015B-0.02Zr-0.01Si-0.04Y
and is mixed it 1:2 with a lean HM filler defined, in wt.-%, as

HM111: Ni-14Cr-1.5Mo-4.5W-3Al-2.7Ta-0.14C-0.015B-0.02Zr-0.01Si-0.04Y
the result after brazing and homogenization is an MA with a composition, in wt.-%, of

MA111: Ni-3.3Co-5Fe-14Cr-1.5Mo-3W-3Al-4.7Ti-2.8Ta-0.1C-0.015B-0.02Zr-0.01Si-rem(Y)

The Liquidus for LM111 is estimated by Thermocalc as 1145°C using TTNi8 and as 1156°C using TCNi8. Hence it will be fully molten for brazing at the solutioning temperature 1200°C used for GTD-111. The Cr and Al levels are the same in MA111 as in GTD-111. Except for moderate reductions in W and Ti, the levels of the strengthening elements are the same in MA111 as in GTD-111, MA111 is broadly GTD-111 with Co partially replaced by Fe. The fact that Ti, which is the main strengthening element in GTD-111, is omitted in HM111 makes HM111 into a lean alloy. Hence it is able to absorb the excess level of Ti in LM111. Even though LM111 gets it main melt depressant effect from Ti it is a fact that Cr, Fe Co, Mo and Ta provide additional effect which is why it is possible to get down to a low Liquidus level of about 1150°C. Based on ThermoCalc with TTNi8, if Cr, Co, Mo, Ti, Fe or Ta are eliminated from LM111 the Liquidus goes up by 124, 5, 12, 256, 81 and 25°C respectively. The main melt depressant effect is seen to come from Cr and Ti. The Fe addition is however important, while Mo and Ta provide not insignificant effect despite the moderate additions. Co only has a small effect.

It is furthermore of interest to note that it is not possible to keep on adding higher and higher levels of melt depressants and expect further reductions in the Liquidus. If Ti is increased by 2 wt.-% in LM111, TTNi8 predict that the Liquidus is increased from 1145°C to 1160°C while TCNi8 predict that the Liquidus is increased from 1156°C to 1188°C. There are limits to how much melt depressant effect it is possible to reach.

The base alloy GTD-141 is a derivative of GTD-111 in which Ta is replaced by Nb. GTD-141 has a composition, in wt.-%, of

Ni-14Cr-9.5Co-1.5Mo-3.7W-3Al-4.9Ti-1.5Nb-0.1C-0.015B-0.02Zr
If the LM filler is defined, in wt.-%, as

LM141: Ni-10Co-15Fe-14Cr-1.5Mo-3Al-14.1Ti-1.5Nb-0.01C-0.015B-0.02Zr-0.01Si-0.04Y
and is mixed it 1:2 with a lean HM filler defined, in wt.-%, as

HM141: Ni-14Cr-1.5Mo-4.5W-3Al-1.5Nb-0.14C-0.015B-0.02Zr-0.04Y
the result after brazing and homogenization is an MA with a composition, in wt.-%, of

MA141: Ni-3.3Co-5Fe-14Cr-1.5Mo-3W-3Al-4.7Ti-1.5Nb-0.1C-0.015B-0.02Zr-0.01Si-rem(Y)

The Liquidus for LM141 is estimated by Thermocalc as 1154°C using TTNi8 and as 1152°C by TCNi8. Hence it will be fully molten for brazing at an assumed solutioning temperature of 1200°C for GTD-141 assuming similarity with GTD-111. The Cr and Al levels are the same in MA111 as in GTD-141. Except for small reductions in W and Ti, the levels of strengthening elements are the same in MA141 as in GTD-141, MA141 is essentially GTD-141 with Co partially replaced by Fe. The fact that Ti, which is the main strengthening element in GTD-141, is omitted in HM141 makes HM141 into a lean alloy. Hence it is able to absorb the excess level of Ti in LM141. Even though LM141 gets it main melt depressant effect from Ti, it is a fact that Fe, Co, Mo and Nb provide additional effect which is why it is possible to get down to a low level of about 1150°C.

The base alloy IN738LC has a composition, in wt.-%, of
Ni-16Cr-8.5Co-1.8Mo-2.6W-3.5Al-3.5Ti-1.8Ta-0.9Nb-0.07C-0.01B-0.02Zr

The melt depressant elements in IN738LC are Cr, Mo, Ti, Ta and Nb. If the LM filler is defined, in wt.-%, as

LM738: Ni-10.5Co-15Fe-14Cr-4.5Mo-3.5Al-10.5Ti-1.8Ta-0.9Nb-0.01C-0.01B-0.02Zr-0.01Si-0.04Y
and is mixed it 1:2 with a lean HM filler defined, in wt.-%,

HM738: Ni-17Cr-3.7W-3.5Al-1.8Ta-0.9Nb-0.11C-0.01B-0.02Zr-0.01Si-0.4Y
the result after brazing and homogenization is an MA with a composition, in wt.-%, of

MA738: Ni-3.5Co-5Fe-16Cr-1.5Mo-2.5W-3.5Al-1.8Ti-0.9Ta-0.07C-0.01B-0.02Zr-0.01Si-rem(Y)

The Liquidus for LM738 is estimated by Thermocalc as 1171°C using TTNi8 and as 1158°C using TCNi8. Hence it will be fully molten for brazing at the solutioning temperature 1200°C used for IN738LC. The Cr and Al levels are the same in MA738 as in IN738LC. Except for small reductions in the Mo and W the levels of strengthening elements are the same in MA738 as in IN738LC, MA738 is essentially IN738LC with Co partially replaced by Fe. The fact that Mo and Ti are omitted in HM738 makes HM738 into a lean alloy. Hence it is able to absorb the excess levels of Mo and Ti in LM738.

The LM filler in the present invention can furthermore be used for thin gap brazing of a blade alloy against a lean nickel base alloy. In particular, it can be used to attach a cover plate made in a lean sheet alloy such as Nim75 or Haynes214 to main part made in a classical blade alloy to form a gas turbine stator part such as a vane or a heat shield. The lean sheet alloy will then act as a diffusion sink for the excess levels of elements such as Fe, Mo, Ti, Ta, Nb or Hf in the LM filler. This will strengthen the sheet alloy in the vicinity of the joint.

The LM filler in the present invention can furthermore be used for thin gap brazing of a blade alloy against any nickel base alloy in which at least one of the surfaces to be brazed has been nickel plated. The nickel plating will then act as a diffusion sink for the excess levels of elements such as Fe, Mo, Ti, Ta, Nb or Hf in the LM filler.

According to one embodiment, the LM filler alloy can contain up to 15 wt.-% Co, between 12 and 18 wt.-% Fe, between 12 and 18 wt.-% Cr, between 1 and 6 wt.-% Mo, between 2.5 and 5.5 wt.-% Al, between 7 and 15 wt.-% Ti, between 2.5 and 10 wt.-% of the sum of Ta+2Nb, up to 0.1 wt.-% C, up to 0.05 wt.-% B, up to 0.1 wt.-% Zr, up to 3 wt.-% Hf, up to 0.1 wt.-% Si, and, up to 0.3 wt.-% of the sum of rare earths such as Sc, Y, the actinides and the lanthanides, the rest being Ni and unavoidable impurities.

Additionally, the LM filler alloy can contain up to 15 wt.-% Co, between 12 and 18 wt.-% Fe, between 12 and 18 wt.-% Cr, between 1 and 6 wt.-% Mo, between 2.5 and 5.5 wt.-% Al, between 7 and 15 wt.-% Ti, between 2.5 and 10 wt.-% of the sum of Ta+2Nb, up to 0.1 wt.-% C, between 0.005 and 0.05 wt.-% B, between 0.005 and 0.05 wt.-% Zr, up to 3 wt.-% Hf, between 0.005 and 0.05 wt.-% Si, and, 0.3 wt.-% of the sum of rare earths such as Sc, Y, the actinides and the lanthanides, the rest being Ni and unavoidable impurities.

Additionally, the LM filler alloy can contain between 14 and 18 wt.-% Fe, between 12 and 14 wt.-% Cr, between 3 and 4.5 wt.-% Mo, between 2.5 and 4 wt.-% Al, between 7 and 10 wt.-% Ti, between 7 and 10 wt.-% Ta, between 0.005 and 0.05 wt.-% C, between 0.005 and 0.05 wt.-% B, between 0.005 and 0.05 wt.-% Zr, between 0.5 and 1.5 wt.-% Hf, between 0.005 and 0.05 wt.-% Si, and, between 0.01 and 0.06 wt.-% of the sum of rare earths such as Sc, Y, the actinides and the lanthanides, the rest being Ni and unavoidable impurities.

In a preferred embodiment called LM792, the LM filler alloy can contain about 16 wt.-% Fe, about 13 wt.-% Cr, about 3.6 wt.-% Mo, about 3.3 wt.-% Al, about 8.4 wt.-% Ti, about 8.4 wt.-% Ta, about 0.01 wt.-% C, about 0.03 wt.-% B, about 0.03 wt.-% Zr, 1 wt.-% Hf, about 0.01 wt.-% Si, and, about 0.04 wt.-% Y.

Alternatively, the LM filler alloy can contain between 7 and 13 wt.-% Co, between 13 and 17 wt.-% Fe, between 12 and 16 wt.-% Cr, between 1 and 2 wt.-% Mo, between 2.5 and 3.5 wt.-% Al, between 13 and 15 wt.-% Ti, between 2.5 and 4 wt.-% Ta, between 0.005 and 0.05 wt.-% C, between 0.005 and 0.05 wt.-% B, between 0.005 and 0.05 wt.-% Zr, between 0.005 and 0.05 wt.-% Si, and, between 0.01 and 0.06 wt.-% of the sum of rare earths such as Sc, Y, the actinides and the lanthanides, the rest being Ni and unavoidable impurities.

In a preferred embodiment called LM111, the LM filler alloy can contain about 10 wt.-% Co, 15 wt.-% Fe, about 14 wt.-% Cr, about 1.5 wt.-% Mo, about 3 wt.-% Al, about 14.1 wt.-% Ti, about 3 wt.-% Ta, about 0.01 wt.-% C, about 0.03 wt.-% B, about 0.03 wt.-% Zr, about 0.01 wt.-% Si, and, about 0.04 wt.-% Y.

Alternatively, the LM filler alloy can contain between 7 and 13 wt.-% Co, between 13 and 17 wt.-% Fe, between 12 and 16 wt.-% Cr, between 1 and 2 wt.-% Mo, between 2.5 and 3.5 wt.-% Al, between 13 and 15 wt.-% Ti, between 1.25 and 2 wt.-% Nb, between 0.005 and 0.05 wt.-% C, between 0.005 and 0.05 wt.-% B, between 0.005 and 0.05 wt.-% Zr, between 0.005 and 0.05 wt.-% Si, and, between 0.01 and 0.06 wt.-% of the sum of rare earths such as Sc, Y, the actinides and the lanthanides, the rest being Ni and unavoidable impurities.

In a preferred embodiment called LM141, the LM filler alloy can contain about 10 wt.-% Co, 15 wt.-% Fe, about 14 wt.-% Cr, about 1.5 wt.-% Mo, about 3 wt.-% Al, about 14.1 wt.-% Ti, about 1.5 wt.-% Nb, about 0.01 wt.-% C, about 0.03 wt.-% B, about 0.03 wt.-% Zr, about 0.01 wt.-% Si, and, about 0.04 wt.-% Y.

Alternatively, the LM filler alloy can contain between 8 and 13 wt.-% Co, between 13 and 17 wt.-% Fe, between 12 and 16 wt.-% Cr, between 3 and 6 wt.-% Mo, between 2.5 and 4.5 wt.-% Al, between 8 and 13 wt.-% Ti, between 1.5 and 2.5 wt.-% Ta, between 0.5 and 1.5 wt.-% Nb, between 0.005 and 0.05 wt.-% C, between 0.005 and 0.05 wt.-% B, between 0.005 and 0.05 wt.-% Zr, between 0.005 and 0.05 wt.-% Si, and, between 0.01 and 0.06 wt.-% of the sum of rare earths such as Sc, Y, the actinides and the lanthanides, the rest being Ni and unavoidable impurities.

In a preferred embodiment called LM738, the LM filler alloy contains about 10.5 wt.-% Co, 15 wt.-% Fe, about 14 wt.-% Cr, about 4.5 wt.-% Mo, about 3.5 wt.-% Al, about 10.5 wt.-% Ti, about 1.8 wt.-% Ta, about 0.9 wt.-% Nb, about 0.01 wt.-% C, about 0.03 wt.-% B, about 0.03 wt.-% Zr, about 0.01 wt.-% Si, and, about 0.04 wt.-% Y.

Table 1-1: Compositions for Aero, New IGT, Classical IGT, and lean sheet alloys referred to in this application.

|      | STAL15SX | STAL15CC | STAL125CC1 | STAL125CC2 | CMSX4 | CM247CC | IN792 |
|------|----------|----------|------------|------------|-------|---------|-------|
| Ni   | B        | B        | B          | B          | B     | B       | B     |
| Cr   | 15       | 15       | 12.5       | 12.5       | 6.4   | 8       | 12.5  |
| Fe   |          |          |            | 4          |       |         |       |
| Co   | 5        | 5        | 5          | 3          | 9     | 9.5     | 8.5   |
| Mo   | 1        | 1        | 1.5        | 1.5        | 0.6   | 0.6     | 1.8   |
| Re   |          |          |            |            | 3     |         |       |
| W    | 4        | 3.7      | 3.5        | 3          | 6.5   | 9.5     | 4     |
| Al   | 4.6      | 5.1      | 5.5        | 5.5        | 5.6   | 5.6     | 3.3   |
| Ti   |          |          |            |            | 1     | 0.7     | 4.2   |
| Ta   | 8        | 8        | 8          | 8          | 6     | 3.2     | 4.2   |
| Nb   |          |          |            |            |       |         |       |
| Hf   | 0.1      | 0.1      | 0.5        | 0.5        | 0.1   | 1.4     | 0.5   |
| C    | 0.015    | 0.07     | 0.07       | 0.07       |       | 0.07    | 0.07  |
| Zr   |          | 0.02     | 0.01       | 0.01       |       | 0.01    | 0.02  |
| B    |          | 0.015    | 0.015      | 0.015      |       | 0.015   | 0.015 |
| Si   | 0.25     | 0.01     | 0.01       | 0.01       |       |         |       |
| Y    |          |          |            |            |       |         |       |

Table 1-2: Compositions for Aero, New IGT, Classical IGT, and lean sheet alloys referred to in this application.

|      | GTD-111 | GTD-141 | IN738LC | Nim75 | Haynes214 |
|------|---------|---------|---------|-------|-----------|
| Ni   | B       | B       | B       | B     |           |
| Cr   | 14      | 14      | 16      | 20    | 16        |
| Fe   |         |         |         |       | 3         |
| Co   | 9.5     | 9.5     | 8.5     |       |           |
| Mo   | 1.5     | 1.5     | 1.8     |       |           |
| Re   |         |         |         |       |           |
| W    | 3.7     | 3.7     | 2.6     |       |           |
| Al   | 3       | 3       | 3.5     |       | 4.5       |
| Ti   | 4.9     | 4.9     | 3.5     | 0.4   |           |
| Ta   | 2.8     |         | 1.8     |       |           |
| Nb   |         | 1.5     | 0.9     |       |           |

(continued)

|  | GTD-111 | GTD-141 | IN738LC | Nim75 | Haynes214 |
|---|---|---|---|---|---|
| Hf |  |  |  |  |  |
| C | 0.1 | 0.1 | 0.07 | 0.1 | 0.04 |
| Zr | 0.02 | 0.02 | 0.02 |  | 0.01 |
| B | 0.015 | 0.015 | 0.015 |  |  |
| Si |  |  |  |  | 0.1 |
| Y |  |  |  |  | 0.01 |

Table 2: Compositions for BFM/LM fillers referred to in this application

|  | BNi 1a | BNi5 | BNi7 | BNi9 | DF4 B | OZ1 | OZ2 | OZ3 | OZ4 | LM79 2 | LM11 1 | LM14 1 | LM73 8 |
|---|---|---|---|---|---|---|---|---|---|---|---|---|---|
| Ni | B | B | B | B | B | B | B | B | B | B | B | B | B |
| Cr | 14 | 19 | 14.3 | 15 | 14 | 6.5 | 4.5 | 15.1 | 16.3 | 13 | 14 | 14 | 14 |
| Fe | 4.5 |  |  | 1.5 |  |  |  |  |  | 16 | 15 | 15 | 15 |
| Co |  |  |  |  | 10 |  |  | 15.8 |  |  | 10 | 10 | 10.5 |
| Mo |  |  |  |  |  |  |  | 13 |  | 3.6 | 1.5 | 1.5 | 4.5 |
| W |  |  |  |  |  |  |  |  |  | 0.5 |  |  |  |
| Al |  |  |  |  | 3.5 |  |  | 2.1 |  | 3.3 | 3 | 3 | 3.5 |
| Ti |  |  |  |  |  | 7.5 | 8 | 10 | 21.2 | 8.4 | 14.1 | 14.1 | 10.5 |
| Ta |  |  |  |  | 2.5 |  |  |  |  | 8.4 | 3 |  | 1.8 |
| Nb |  |  |  |  |  |  |  |  |  |  |  | 1.5 | 0.9 |
| Hf |  |  |  |  |  |  | 18.5 |  |  | 1 |  |  |  |
| C | 0.0 6 | 0.06 | 0.06 | 0.06 | 0.0 5 |  |  |  |  | 0.01 | 0.01 | 0.01 | 0.01 |
| Zr |  |  |  |  |  | 11 |  |  |  | 0.03 | 0.03 | 0.03 | 0.03 |
| B | 3.1 |  |  | 3.6 | 2.8 |  |  |  |  | 0.03 | 0.03 | 0.03 | 0.03 |
| Si | 4.5 | 10.1 |  |  |  |  |  |  |  | 0.01 | 0.01 | 0.01 | 0.01 |
| P |  |  | 10.2 |  |  |  |  |  |  |  |  |  |  |
| Y |  |  |  |  | 0.0 4 |  |  |  |  | 0.04 | 0.04 | 0.04 | 0.04 |

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

**Claims**

1. Metal alloy containing

0 wt.-% to 15 wt.-% Co,
12 wt.-% to 18 wt.-% Fe,
12 wt.-% to and 18 wt.-% Cr,
1 wt.-% to 6 wt.-% Mo,
2.5 wt.-% to 5.5 wt.-% Al,
7 wt.-% to 15 wt.-% Ti,
0 wt.-% to 0.1 wt.-% C,
0 wt.-% to 0.05 wt.-% B,

0 wt.-% to 0.1 wt.-% Zr,

0 wt.-% to 3 wt.-% Hf,

0 wt.-% to 0.1 wt.-% Si, and

a total amount of the sum of the wt.-% of Ta and twice the wt.-% of Nb being selected from a range from 2.5 wt.-% to 10 wt.-%,

a total amount of rare earths such as Sc, Y, actinides and lanthanides being selected from a range from 0 to 0.3 wt.-%, the rest being Ni and unavoidable impurities.

2. Metal alloy according to claim 1, wherein the metal alloy contains

0 wt.-% to 15 wt.-% Co,

12 wt.-% to 18 wt.-% Fe,

12 wt.-% to 18 wt.-% Cr,

1 wt.-% to 6 wt.-% Mo,

2.5 wt.-% to 5.5 wt.-% Al,

7 wt.-% to 15 wt.-% Ti,

2.5 and 10 wt.-% of the sum of Ta+2Nb,

0 wt.-% to 0.1 wt.-% C,

0.005 wt.-% to 0.05 wt.-% B,

0.005 wt.-% to 0.05 wt.-% Zr,

0 wt.-% to 3 wt.-% Hf,

0.005 wt.-% to 0.05 wt.-% Si, and

a total amount of rare earths such as Sc, Y, actinides and lanthanides being selected from a range from 0.01 wt.-% and

0.3 wt.-%, the rest being Ni and unavoidable impurities.

3. Metal alloy according to any of the preceding claims, wherein the metal alloy contains 14 wt.-% to 18 wt.-% Fe,

12 wt.-% to 14 wt.-% Cr,

3 wt.-% to 4.5 wt.-% Mo,

2.5 wt.-% to 4 wt.-% Al,

7 wt.-% to 10 wt.-% Ti,

7 wt.-% to 10 wt.-% Ta,

0.005 wt.-% to 0.05 wt.-% C,

0.005 wt.-% to 0.05 wt.-% B,

0.005 wt.-% to 0.05 wt.-% Zr,

0.5 wt.-% to 1.5 wt.-% Hf,

0.005 wt.-% to 0.05 wt.-% Si, and,

a total amount of rare earths such as Sc, Y, actinides and lanthanides being selected from a range from 0.01 wt.-% to 0.06 wt.-%,

the rest being Ni and unavoidable impurities.

4. Metal alloy according to any of the preceding claims, wherein the metal alloy contains about 16 wt.-% Fe, about 13 wt.-% Cr, about 3.6 wt.-% Mo, about 3.3 wt.-% Al, about 8.4 wt.-% Ti, about 8.4 wt.-% Ta, about 0.01 wt.-% C, about 0.03 wt.-% B, about 0.03 wt.-% Zr, 1 wt.-% Hf, about 0.01 wt.-% Si, and, about 0.04 wt.-% Y, the rest being Ni and unavoidable impurities.

5. Metal alloy according to any of the claims 1 or 2, wherein the metal alloy contains

7 wt.-% to 13 wt.-% Co,

13 wt.-% to 17 wt.-% Fe,

12 wt.-% to 16 wt.-% Cr,

1 wt.-% to 2 wt.-% Mo,

2.5 wt.-% to 3.5 wt.-% Al,

13 wt.-% to 15 wt.-% Ti,

2.5 wt.-% to 4 wt.-% Ta,

0.005 wt.-% to 0.05 wt.-% C,

0.005 wt.-% to 0.05 wt.-% B,

0.005 wt.-% to 0.05 wt.-% Zr,
0.005 wt.-% to 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

6.   Metal alloy according to claim 5, wherein the metal alloy contains about 10 wt.-% Co, 15 wt.-% Fe, about 14 wt.-% Cr, about 1.5 wt.-% Mo, about 3 wt.-% Al, about 14.1 wt.-% Ti, about 3 wt.-% Ta, about 0.01 wt.-% C, about 0.03 wt.-% B, about 0.03 wt.-% Zr, about 0.01 wt.-% Si, and, about 0.04 wt.-% Y, the rest being Ni and unavoidable impurities.

7.   Metal alloy according to claim 2, wherein the metal alloy contains

7 wt.-% to 13 wt.-% Co,
13 wt.-% to 17 wt.-% Fe,
12 wt.-% to 16 wt.-% Cr,
1 wt.-% to 2 wt.-% Mo,
2.5 wt.-% to 3.5 wt.-% Al,
13 wt.-% to 15 wt.-% Ti,
1.25 wt.-% to 2 wt.-% Nb,
0.005 wt.-% to 0.05 wt.-% C,
0.005 wt.-% to 0.05 wt.-% B,
0.005 wt.-% to 0.05 wt.-% Zr,
0.005 and 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

8.   Metal alloy according to claim 7, wherein the metal alloy contains about 10 wt.-% Co, 15 wt.-% Fe, about 14 wt.-% Cr, about 1.5 wt.-% Mo, about 3 wt.-% Al, about 14.1 wt.-% Ti, about 1.5 wt.-% Nb, about 0.01 wt.-% C, about 0.03 wt.-% B, about 0.03 wt.-% Zr, about 0.01 wt.-% Si, and, about 0.04 wt.-% Y, the rest being Ni and unavoidable impurities.

9.   Metal alloy according to any of claims 1 or 2, wherein the metal alloy contains

8 wt.-% to 13 wt.-% Co,
13 wt.-% to 17 wt.-% Fe,
12 wt.-% to 16 wt.-% Cr,
3 wt.-% to 6 wt.-% Mo,
2.5 wt.-% to 4.5 wt.-% Al,
8 wt.-% to 13 wt.-% Ti,
1.5 wt.-% to 2.5 wt.-% Ta,
0.5 wt.-% to 1.5 wt.-% Nb,
0.005 wt.-% to 0.05 wt.-% C,
0.005 wt.-% to 0.05 wt.-% B,
0.005 wt.-% to 0.05 wt.-% Zr,
0.005 wt.-% to 0.05 wt.-% Si, and,
a total amount of rare earths such as Sc, Y, actinides and lanthanides being selected from a range from 0.01 wt.-% to 0.06 wt.-%,
the rest being Ni and unavoidable impurities.

10.  Metal alloy according to claim 9, wherein the metal alloy contains about 10.5 wt.-% Co, 15 wt.-% Fe, about 14 wt.-% Cr, about 4.5 wt.-% Mo, about 3.5 wt.-% Al, about 10.5 wt.-% Ti, about 1.8 wt.-% Ta, about 0.9 wt.-% Nb, about 0.01 wt.-% C, about 0.03 wt.-% B, about 0.03 wt.-% Zr, about 0.01 wt.-% Si, and, about 0.04 wt.-% Y, the rest being Ni and unavoidable impurities.

11.  Metal alloy according to any of the preceding claims, wherein the metal alloy was produced with a low sulfur process resulting in less than 5 ppmw S of the metal alloy.

12.  Use of a metal allow of any of the preceding claims for brazing.

**13.** Use according to claim 12, wherein the brazing is a wide gap brazing with a lean high melting filler to enable a mixed alloy which is a classical industrial gas turbine blade alloy with a high phase stability as outlined the section describing the invention in which the high melting filler is produced with a low sulfur process resulting in less than 5ppmw S.

**14.** Use according to claim 12, wherein the brazing is a thin gap brazing of a classical IGT alloy to a lean sheet alloy such that the sheet alloy is strengthened at and close to the joint as it absorbs the excess levels of strengthening elements from the low melting filler.

**15.** Use according to claim 12, wherein the brazing is a thin gap brazing of parts made in Nickel base alloys in which one or more of the surfaces to be brazed has been Ni plated such that the plating is strengthened as it absorbs the excess levels of strengthening elements from the low melting filler.

**16.** Use according to claim 12, wherein the brazing is a thin gap brazing of parts made in lean Nickel base alloys such as, but not restricted to, Nim75 in which the joint is strengthened relative to said Nickel base alloy as it absorbs the excess levels of strengthening elements from the low melting filler.

**EUROPEAN SEARCH REPORT**

Application Number

EP 24 20 2780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2015/343574 A1 (OZBAYSAL KAZIM [US]) 3 December 2015 (2015-12-03) * claims 6, 7 * | 1-16 | INV. C22C19/05 B23K1/00 B23K35/02 B23K35/30 C22C30/00 |
| A | WO 2024/075560 A1 (NAT INST MATERIALS SCIENCE [JP]) 11 April 2024 (2024-04-11) * claim 9 * | 1-16 | |
| A | US 11 821 060 B2 (SAFRAN [FR]; CENTRE NAT RECH SCIENT [FR]; UNIV PARIS VAL DE MARNE [FR]) 21 November 2023 (2023-11-21) * the whole document * | 1-16 | |
| A | US 11 344 977 B2 (SIEMENS ENERGY INC [US]) 31 May 2022 (2022-05-31) * the whole document * | 1-16 | |

TECHNICAL FIELDS SEARCHED (IPC)

C22C
B23K

The present search report has been drawn up for all claims

| Place of search | Date of completion of the search | Examiner |
|---|---|---|
| The Hague | 14 February 2025 | Morra, Valentina |

## ANNEX TO THE EUROPEAN SEARCH REPORT
## ON EUROPEAN PATENT APPLICATION NO.

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2025

| Patent document cited in search report | Publication date | Patent family member(s) | | Publication date |
|---|---|---|---|---|
| US 2015343574 A1 | 03-12-2015 | NONE | | |
| WO 2024075560 A1 | 11-04-2024 | NONE | | |
| US 11821060 B2 | 21-11-2023 | CN | 113614260 A | 05-11-2021 |
| | | EP | 3942082 A2 | 26-01-2022 |
| | | FR | 3094018 A1 | 25-09-2020 |
| | | US | 2022145428 A1 | 12-05-2022 |
| | | WO | 2020188205 A2 | 24-09-2020 |
| US 11344977 B2 | 31-05-2022 | CN | 106170368 A | 30-11-2016 |
| | | EP | 3131697 A2 | 22-02-2017 |
| | | KR | 20160145135 A | 19-12-2016 |
| | | US | 2015290747 A1 | 15-10-2015 |
| | | WO | 2015160523 A2 | 22-10-2015 |

EPO FORM P0459

For more details about this annex : see Official Journal of the European Patent Office, No. 12/82

**REFERENCES CITED IN THE DESCRIPTION**

**Patent documents cited in the description**

- US 011344977 B2
- US 20150343574 A1